# EUROPEAN PATENT APPLICATION

(11) **EP 4 390 353 A1**
(43) Date of publication of application: **26.06.2024**
(21) Application number: 22214798.5
(22) Date of filing: 20.12.2022
(51) Int. Cl.: G01L 5/24, G01B 11/16, B25B 23/14, F16B 31/02

(54) **METHOD FOR ESTIMATING OR CALCULATING A LOAD ON A COMPONENT**

(71) Applicant: Airbus Operations GmbH, 21129 Hamburg (DE)
(72) Inventor: Werwer, Malte, 21129 Hamburg (DE)

(57) **Abstract**

The invention provides a method for estimating or calculating a load (LO) on a component (44), the component (44) having a suitably defined grid (30) of a plurality of equidistant lines (32) and/or dots arranged on a surface (46) thereof, the surface (46) being deformable under the load (LO) of the component (44), the method comprising:
a) capturing the grid (30) of the component (44) under a load (LO);
b) superimposing the captured grid (30) with the grid (30) of the unloaded component (44) for generating an interference pattern (36), particularly a beat pattern (38); and
c) estimating or calculating the load (LO) on the component (44) based on the interference pattern (36).

## Description

The invention relates to a method for estimating or calculating a load on a component. The invention further relates to a data processing device, a fastener tightening device, a computer program, a computer-readable medium, a component, and a bolted joint.

Bolted joints, for instance tensions joints, are widely used structural elements. For many applications, it is important to control the load or preload during installation or to monitor the preload in service. Existing systems for preload measurement, such as ultrasonic measurement or preload indicating washers, may be complicated.

The object of the invention is to provide an improved and simple method for estimating or calculating a load on a component.

To achieve this object, the invention provides a method for estimating or calculating a load on a component according to claim 1. A data processing device, a fastener tightening device, a computer program, a computer-readable medium, a component, and a bolted joint are subject-matter of the parallel claim.

Advantageous embodiments of the invention are subject-matter of the dependent claims.

In one aspect, the invention provides a method for estimating or calculating a load on a component, the component having a suitably defined grid of a plurality of equidistant lines and/or dots arranged on a surface thereof, the surface being deformable under a load of the component, the method comprising:
a) capturing the grid of the component under a load;
b) superimposing the captured grid with the grid of the unloaded component for generating an interference pattern, particularly a beat pattern; and
c) estimating or calculating the load on the component based on the interference pattern.

Preferably, step c) comprises:
c1) analyzing the interference pattern analytically and/or by a machine learning algorithm.

Preferably, step c) comprises:
c2) measuring a calibration curve of the load as a function of a deformation of the component.

Preferably, step c) comprises:
c3) determining an extrema distance between interference extrema of the interference pattern.

Preferably, step b) comprises:
b1) capturing the grid of the unloaded component.

Preferably, step b) comprises:
b2) capturing one or more dimensions of a reference item for reference.

The reference item preferably does not or does insignificantly deform under the load. The grid of the unloaded component and/or the grid of the component under the load is preferably captured along with the one or more dimensions of the reference item.

In another aspect, the invention provides a data processing device having an image and/or video capture device for capturing an image and/or video and means adapted to execute the steps of the method according to any of the preceding embodiments.

In another aspect, the invention provides a fastener tightening device for tightening a fastener, comprising the data processing device.

In another aspect, the invention provides a computer program comprising instructions to cause the data processing device to execute the steps of the method.

In another aspect, the invention provides a computer-readable medium having stored thereon the computer program.

In another aspect, the invention provides a component having a grid of a plurality of equidistant lines and/or dots arranged on a surface thereof, the surface being deformable under a load of the component, the grid being defined such that a superimposition of the grid of the component under the load with the grid of the unloaded component leads to an interference pattern, in particular a beat pattern.

Preferably, a deformation of the surface leads to a change of a distance between the lines and/or dots of the grid.

Preferably, the grid is engraved on the surface, more preferably by a laser, more preferably with a dot density resolution above 1000 dpi.

Preferably, the component is configured as a washer.

Preferably, the washer has a circumference, particularly a cylindrical circumference, the lines and/or dots of the grid being arranged on said circumference.

Preferably, the washer has a top region, the lines and/or dots of the grid being arranged on said top region.

Preferably, the washer is designed as a conical washer.

Preferably, the lines of the grid are arranged in an axial direction of the washer and/or in a direction of the load.

In another aspect, the invention provides a bolted joint, particularly a tension joint, clamping two or more clamp components together and including a male threaded fastener secured with a female screw thread, and a washer according to any of the preceding embodiments, the bolted joint clamping the washer.

Embodiments of the invention preferably have the following advantages and effects:
A spherical or conical washer may show a relatively large diametrical expansion. In preferred embodiments, a grid is engraved into the washer. The grid may deform with the washer when a tension bolt is loaded (preload or actual load).

Pictures of the undeformed and deformed washer are preferably superimposed in order to obtain an interferometric or interference pattern. The interferometric or interference pattern may be analyzed analytically or by artificial intelligence in order to obtain the bolt load.

If the analysis is done by artificial intelligence, for example by a neural network, the preload measurement may preferably be performed with an application (app) on a mobile device, such as a smartphone.

Embodiments of the invention are now explained in more detail with reference to the accompanying drawings of which
- Fig. 1: shows an embodiment of a bolted joint in a side view;
- Fig. 2: shows an embodiment of a washer of the bolted joint in a side view;
- Fig. 3: shows the washer in a top view;
- Fig. 4: a top region of the bolted joint in a side view;
- Fig. 5: a circumference of the washer in more detail;
- Fig. 6: a grid of the unloaded washer and the grid of the washer under load;
- Fig. 7: a superimposition of the grid of the unloaded washer and the grid of the washer under load;
- Fig. 8: a schematic diagram of a bolted joint preload versus a diametrical expansion of the washer; and
- Fig. 9: an embodiment of a method for determining the load on a component.

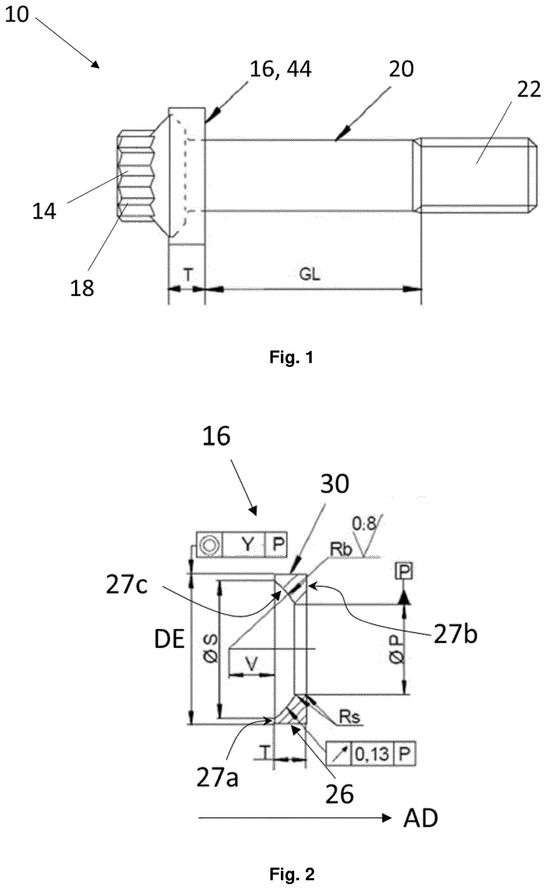

Fig. 1 shows an embodiment of a bolted joint 10 in a side view.

The bolted joint 10 is configured as a tension joint. Further, the bolted joint 10 is configured for clamping two or more clamp components together. The bolted joint 10 includes a male threaded fastener 14 and a washer 16. The fastener 14 includes a fastener head 18 and a fastener shank 20 having a threaded portion 22. For securing the fastener 14, the bolted joint 10 includes a female screw thread arranged opposite of the fastener head 18 and capturing the threaded portion 22 of the fastener shank 20. When clamped by the bolted joint 10, the two or more clamp components are clamped between the fastener head 18 and the screw thread.

The bolted joint 10 is further configured for clamping the washer 16, for example between the two or more clamp components and the fastener head 18.

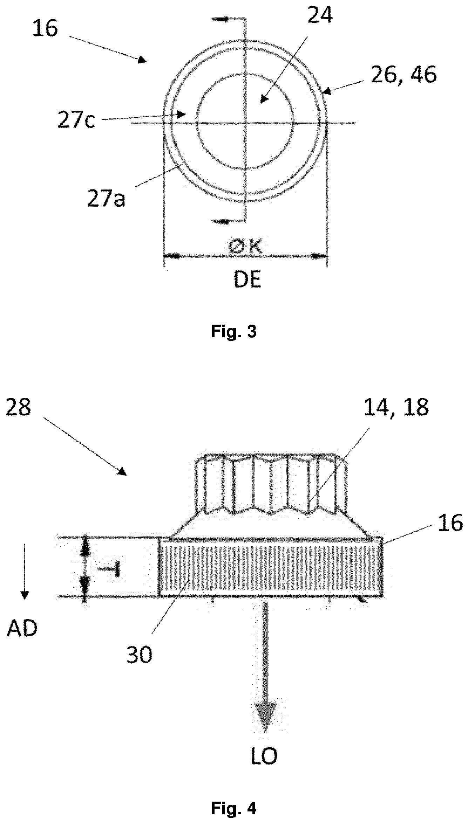

Fig. 2 und 3 show the washer 16 in a side view and a top view, respectively.

The washer 16 has an annular shape with an outer circumference 26, a top region 27a, a bottom region 27b, and a through hole 24.

The circumference 26 has a cylindrical shape. The washer 16 is further designed as a conical washer, i.e., the through hole 24 includes a support surface 27c that extends inclined from the top region 27a to the bottom region 27b. However, within the scope of the invention, other shapes of the washer 16 are possible.

The washer 16 further has a diametrical expansion DE.

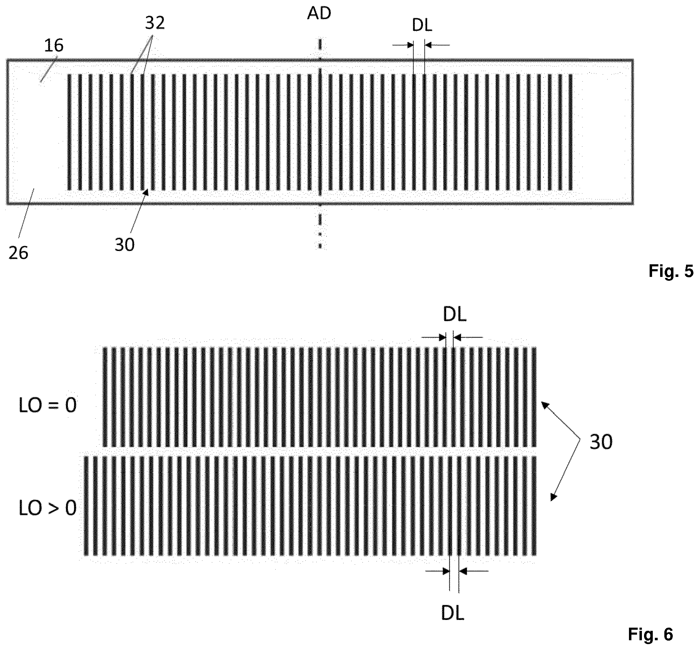

Fig. 4 shows a top region 28 of the bolted joint 10 in a side view, while Fig. 5 shows the circumference 26 of the washer 16 in more detail.

As can be seen from Fig. 4 and 5, a grid 30 is arranged on the circumference 26. The grid 30 may be engraved on the circumference 26, for example, by a laser. The laser can engrave the grid 30 up to a dot density resolution of 1000 dpi or above. However, within the scope of the invention, the grid 30 may be arranged on the circumference 26 by means of any other method with a suitable resolution. Within the scope of the invention, the grid 30 may be also arranged on the top region 27a of the washer 16.

The grid 30 includes a plurality of lines 32. Here the lines are straight lines, but any other form of lines 32 or even dots may be possible according to the invention. The lines 32 are arranged on the circumference 26 in an axial direction AD of the washer 16 perpendicular to the diametrical expansion DE and in a direction of a load LO. Along the circumference 26, the lines 32 are arranged in an equidistant manner with a distance DL to each other.

The upper part of Fig. 6 shows the grid 30 of the unloaded washer 16, while the lower part of Fig. 6 shows the grid 30 of the washer 16 under the load LO.

As can be seen from the comparison, the grid 30 is deformed when the washer 16 is under the load LO. A reason for this is that the washer 16 or the circumference 26 is deformed under the load LO and the deformation of the circumference 26 leads to a change of the distance DL between the lines 32 of the grid 30.

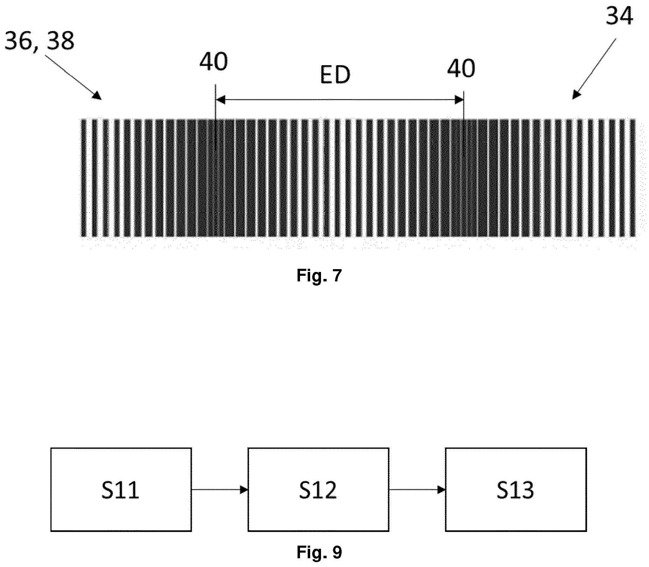

Fig. 7 shows a superimposition 34 of the grid 30 of the unloaded washer 16 and the grid 30 of the washer 16 under the load LO. The superimposition 34 generates an interference pattern 36, particularly a beat pattern 38. The interference pattern 36 includes one or more interference extrema 40, i.e., minima and/or maxima. Thus, the grid 30, e.g., the line distance DL, is defined such that the superimposition 34 of the grid 30 of the washer 16 under the load LO with the grid of the unloaded washer 16 leads to such an interference pattern 36 or beat pattern 38.

In other words, the lines 32 may be interpreted as wavefronts and the distance DL between the lines 32 may be interpreted as a wave length which changes when the circumference 26 is deformed. The superimposition 34 of two waves with slightly different frequencies leads in general to a beat phenomenon.

For obtaining the grid 30 of the unloaded washer 16, the grid 30 of the washer 16 under the load LO and/or the superimposition 34, one or more dimensions of a reference item may be needed for reference, wherein the reference item preferably does not or does insignificantly deform under the load LO. The grid of the unloaded washer 16 and/or the grid of the washer 16 under the load LO is preferably captured along with the one or more dimensions of said reference item. As reference item, portions of the bolted joint 10 can be used, that do not deform under the load LO, e.g., the fastener 14 or the fastener head 18. Additionally or alternatively, the bolted joint 10 may include one or more additional elements, e.g., another washer or a sticker, that do not deform under the load LO and that can be used as said reference item.

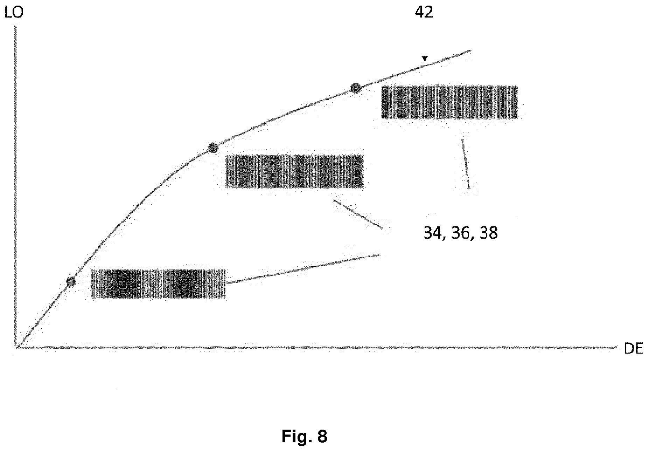

Fig. 8 shows the load LO on the bolted joint 10 as a function of the diametrical expansion DE of the washer 16.

As can be seen from Fig. 8, a higher diametrical expansion DE is related to a higher load LO on the bolted joint 10. In other words, the relation between the diametrical expansion DE and the load LO forms a calibration curve 42.

Fig. 8 further shows three examples for the interference pattern 36 each example obtained at a position on the calibration curve 42. The different interference pattern 36 indicate that the deformation of the circumference 26 is associated with the load LO on the bolted joint 10. The change of the diametrical expansion DE leads to the change of the distance DL and consequently to the change of the interference pattern 36 or the beat pattern 38. The load LO on the bolted joint 10 or the washer 16 can thus be estimated or calculated from the interference pattern 36.

The interference pattern 36 or the beat pattern 38 may be analyzed analytically and/or by a machine learning algorithm, such as a neural network. For example, the interference pattern 36 may be analyzed by determining an extrema distance ED between two or more interference extrema 40. Additionally or alternatively, the calibration curve 42 may be determined.

The washer 16 in the bolted joint 10 can be, in general, regarded as a component 44 under the load LO. The circumference 26 can be regarded as a surface 46 being deformable under the load LO of the component 44. The invention thus also provides a method for estimate a load LO on a component 40, the component 44 having a suitably defined grid 30 of a plurality of equidistant lines 32 and/or dots arranged on a surface 46 thereof, the surface 46 being deformable under the load LO of the component 44. The lines 32 are preferably arranged in a direction of the load LO.

An embodiment of the method is shown in Fig. 9.

In a step S11, the method comprises:
- capturing the grid 30 of the component 44 under a load LO.

In a step S12, the method comprises:
- superimposing the captured grid 30 with the grid 30 of the unloaded component 44 for generating an interference pattern 36, particularly the beat pattern 38.

The grid 30 of the unloaded component 44 may be captured before loading the component 44. For obtaining the grid 30 of the component 44 under the load LO, the grid 30 of the unloaded component 44, and/or the superimposition 34, one or more dimensions of a reference item may be captured for reference, wherein the reference item does not or does insignificantly deform under the load LO. The grid of the unloaded component 44 and/or the grid of the component under the load LO is preferably captured along with the one or more dimensions of said reference item. As reference item, such portions of the component 44 can be used, that do not deform under the load LO. Additionally or alternatively, the component 44 may be surrounded by or included in a part having one or more said reference items. Additionally or alternatively, the grid 30 of the unloaded component 44 may be already known from a manufacturing process of the component 44, for example, when engraving the grid 30 on the surface 46 by a laser.

In a step S13, the method comprises:
- estimating or calculating the load LO on the component 44 based on the interference pattern 36.

In step S11, the grid 30 can be captured by a data processing device (not shown) having an image and/or video capture device for capturing an image and/or video. For example, the data processing device may be a mobile device, such as a smartphone or the like. The data processing device is further adapted to execute the steps S12 and S13. Thus, the invention also provides the data processing device having the image and/or video capture device and means adapted to execute the steps of the method. The invention also provides a fastener tightening device (not shown) for tightening the fastener, comprising the data processing device. The invention also provides a computer program (not shown) comprising instructions to cause the data processing device to execute the steps of the method. The invention further provides a computer-readable medium (not shown) having stored thereon the computer program.

### List of reference signs:

- 10: bolted joint
- 14: fastener
- 16: washer
- 18: fastener head
- 20: fastener shank
- 22: threaded portion
- 24: through hole
- 26: circumference
- 27a: top region of washer
- 27b: bottom region of washer
- 27c: support surface
- 28: top region of bolted joint
- 30: grid
- 32: grid lines
- 34: superimposition
- 36: interference pattern
- 38: beat pattern
- 40: interference extremum
- 42: calibration curve
- 44: component
- 46: surface

- AD: axial direction
- DE: diametrical expansion
- DL: line and/or dot distance
- ED: extrema distance
- LO: load

## Claims

1. A method for estimating or calculating a load (LO) on a component (44), the component (44) having a suitably defined grid (30) of a plurality of equidistant lines (32) and/or dots arranged on a surface (46) thereof, the surface (46) being deformable under the load (LO) of the component (44), the method comprising:
a) capturing the grid (30) of the component (44) under a load (LO);
b) superimposing the captured grid (30) with the grid (30) of the unloaded component (44) for generating an interference pattern (36), particularly a beat pattern (38); and
c) estimating or calculating the load (LO) on the component (44) based on the interference pattern (36).

2. The method according to claim 1, **characterized in that** step c) comprises one, two or all of the following:
c1) analyzing the interference pattern (36) analytically and/or by a machine learning algorithm; and/or
c2) measuring a calibration curve (42) of the load (LO) as a function of a deformation of the component (44); and/or
c3) determining an extrema distance (ED) between interference extrema (40) of the interference pattern (36).

3. A data processing device having an image and/or video capture device for capturing an image and/or video and means adapted to execute the steps of the method according to claim 1 or 2.

4. A fastener tightening device for tightening a fastener, comprising the data processing device of claim 3.

5. A computer program comprising instructions to cause the data processing device of claim 3 to execute the steps of the method according to claim 1 or 2.

6. A computer-readable medium having stored thereon the computer program of claim 5.

7. A component (44) having a grid (30) of a plurality of equidistant lines (32) and/or dots arranged on a surface (46) thereof, the surface (46) being deformable under a load (LO) of the component (44), the grid (30) being defined such that a superimposition (34) of the grid (30) of the component (44) under the load (LO) with the grid (30) of the unloaded component (44) leads to an interference pattern (36), particularly a beat pattern (38).

8. The component (44) of claim 7, **characterized in that** a deformation of the surface (46) leads to a change of a distance (DL) between the lines (32) and/or dots of the grid (30).

9. The component (44) according to claim 7 or 8, **characterized in that** the component (44) is configured as a washer (16).

10. The component (44) according to claim 9, **characterized in that** the washer (16) has a circumference (26), particularly a cylindrical circumference (26), the lines (32) and/or dots of the grid (30) being arranged on said circumference (26).

11. The component (44) according to claim 9 or 10, **characterized in that** the lines (32) of the grid (30) are arranged in an axial direction (AD) of the washer (16) and/or in a direction of the load (LO).

12. A bolted joint (10), particularly a tension joint, clamping two or more clamp components together and including a male threaded fastener (14) secured with a female screw thread, and a washer (16) according to claim 9, 10 or 11, the bolted joint (10) clamping the washer (16).
